# EUROPEAN PATENT SPECIFICATION

(11) **EP 1 584 391 B1**
(45) Date of publication and mention of the grant of the patent: **20.02.2008**
(21) Application number: 05380045.4
(22) Date of filing: 14.03.2005
(51) Int. Cl.: B23D 23/00, B23D 33/00, B23D 15/04

(54) **Metal bar-shear**
Metallstrangschere
Cisaille pour couper des barres métalliques

(30) Priority: 15.03.2004 ES 200400632
(43) Date of publication of application: 12.10.2005
(73) Proprietor: FAGOR, S.COOP., 20500 Mondragon (Guipuzcoa) (ES)
(72) Inventor: Zabala Galdos, Asier, 20500 Mondragon (Guipuzcoa) (ES)
(74) Representative: Igartua, Ismael

(56) References cited:
- EP-A- 0 432 512
- EP-A- 0 557 866
- EP-A- 0 914 891
- US-A- 3 972 257
- US-A- 4 409 871

## Description

### AIM OF THE INVENTION

This invention relates to a metal bar-shear according to the preamble of claim 1. This shear can be considerably improved, with notable innovations, both insofar as the manufacturing and assembly is concerned and the subsequent use and maintenance of this type of shear.The shear of the invention is intended for the metal industrial machinery sector.

In particular, the aim of the invention is to make it possible to obtain the perfect assembly of all the parts and elements: guide carriage, retainer seals, crankshaft, etc., as well as maintenance including disassembly and the simple cleaning of the whole mechanism and the replacement of the necessary bushings, or other larger necessary parts, which tasks are currently time-consuming and difficult insofar as the handling and dismantling of this type of machines is concerned owing to the heavy weight of the parts or details thereof, without affecting the normal operation of the metal bar-shear in any way.

This aim is achieved with a metal bar-shear having the features of claim 1.

### BACKGROUND TO THE INVENTION

The systems that are currently known and used are very varied (see e.g. US 3972257A or US4409871A) but, insofar as assembly and maintenance are concerned, they all suffer from the same drawback, which is cleaning the mechanisms thereof and assembling and dismantling the shear block which, in the case of heavy machines, needs to be a large or heavy block or frame, which makes for considerably cumbersome handling, although it has been considered that if any modification is made to these structures, it could affect their good operation, whereby the shapes and arrangements included in this invention are a great contribution, since they do not alter in any way the operation of said metal bar-shears, improving the assembly of their parts and details, including retainer seals that owing to their arrangement improve both their purpose, preventing scratches and the subsequent backlashes, and their replacement, without specifically dismantling the machine, the same occurring with both the access to the carriage axis, that is the crankshaft, and the adjustment and cleaning, or repair of the carriage guides that support the shear's movable blade.

To summarise, said machines have always had a "block" image hindering access to their interior, however, it is true that with continuous metal bar cutting work, said machine construction cannot prevent chips or waste from flying off, in each cutting operation, and although this may appear to be minimal, it is continuous, forming debris that gets inside the carriage guide, in spite of the retainer seals present, and this is also caused by the fact that said retainer seals are worn and torn and end up letting chips through, which scratch the carriage, and produce backlashes throughout the mechanism, causing the subsequent wear and tear of the blades proper and poor shear operation, delaying the cleaning and preparation of said shear because this involves stopping the machine for a considerably lengthy time and the costs of handling the machine to clean it, replace parts and prepare it, which makes operation and also maintenance more expensive.

In particular, upon observation of the arrangement of the elements of the metal bar-shear according to the preamble of claim 1, this includes, beginning with the carriage guide, an arrangement in which said guides are completely accessible, since the carriage includes an arrangement of bores that enable the carriage to be held and supported therethrough by pins, which rest on the shear frame proper, thus allowing the guides to be inserted or removed so as to proceed with the assembly, as well as the cleaning and even the replacement of the guides or their parts, such as bushings that logically suffer wear and tear and must be replaced with use.

### DESCRIPTION OF THE INVENTION

In order to understand the problem raised and the proposed solution, it is based on the principle that there is a need to both assemble and maintain a shear, in view of the robust nature of said machine, because of the heavy weight of its parts and the block or frame in which said parts are mounted, and the chips that accumulate through the use or operation of said machine, with the continual cutting of the metal bars and the movement of its entire guide mechanism, bushings, carriage, crankshaft, etc., it being possible to improve said operation, with improved assembly or maintenance, by virtue of the new arrangement of the elements of the invention, which provide direct access for assembly or disassembly, without it being necessary to open the frame, or dismantle the carriage, which is a great novel feature and has its subsequent advantage.

An embodiment of the invention according to claim 1 is a metal bar-shear made up of various characteristic elements, the first being the bores (2) in the carriage (1) in the upper part thereof, which coincide at a certain point, with other bores (3) made in both walls of the frame (4-5) and which, when they all coincide, enable pins to be inserted that can block the carriage (1) and even leave it hanging and secured, so that the side guide (6-7) of the carriage (1) can be assembled or removed, both the upper guide (6) and the lower guide (7), since the upper guide could be inserted or removed from the front of the frame, where a window (8) is formed for this purpose, and the lower guide can be inserted or removed through another window (9) formed in the rear lower part of the frame for this purpose, and particularly to facilitate this removal a roller support (22) is provided, and with this, once the guides have been removed, access is gained both to the guide bars (10) and to inside the frame (11) where, in operation, the chips and waste could have fallen, which have caused the wear and tear, scratches and backlashes in the carriage, and all these parts can be put back, once cleaned and repaired or replaced, and they can all be re-assembled and operation can continue, once the pins have been removed that were applied to the carriage (1) via the bores (2) with the frame in the holes (3) of the frame walls (4, 5).

It is observed that by having the carriage attached to the frame, one of the frame walls, in particular the outside wall, is arranged opposite the crankshaft, said wall having a central opening through which the crankshaft can be removed, after dismantling the flanged tube, which is larger so as to cover the whole opening provided in said frame wall, and so that once assembled, a place is provided for the actual block on one side or the other. All this, together with the retainer seals and brushes included in the head of the carriage supporting the blades, some of which carriage heads due to their arrangement, allow the retainer seals and brushes to be replaced or simply mated, through the upper part of the frame to allow the assembly and maintenance thereof; and another retainer seal can be replaced in front, since there is direct access thereto.

Also said access to the guides (6-7) means said guides can be "V" shaped, which provides a better seat for the carriage (1) since it increases the contact surface between said carriage and the guides (6-7) via the guide bars (10) included in said guides, cleaning said guides (6-7) can be a straightforward operation, since full access is provided thereto, and furthermore, a better seat and guiding of the carriage (1) is obtained than in those known in the market, which traditionally included flat guides.

Furthermore, and availing of the possibility of the carriage (1) being blocked as described, said arrangement also enables the release of the flanged tube (12) which supports the crankshaft (13) and its eccentric (14) that produces the movement of the carriage (1), and in releasing said flanged tube (12) access is gained to the crankshaft (13) which, due to the larger opening formed in the frame on the outer wall (5), can also be dismantled, and all the parts can be repaired, or it can all be adjusted or simply cleaned or greased, which is a very significant development even though, as already indicated, on several occasions, these are large, heavy parts, and facilitating their access and maintenance and replacement, from the outset, makes for a more efficient and improved assembly and subsequent maintenance and replacement, guaranteeing its good use and operation.

Lastly and as a complementary indication to guarantee good use or operation, and for those with knowledge of the problem situation caused by all the chips that fly off during the cutting of the metal bars, retainer seal and brush units (15-16) are provided, as well as a brush (17) contained in the head of the carriage (1) next to where the blade (19) is supported and the walls (4-5) of the frame, in order to obstruct the inlet of chips and the scratches or wear and tear of all the mobile parts. Said retainer seal and brush units (15-16) are attached to the frame and they can be replaced since they can be accessed through the upper part (18) of the frame, which is provided with its windows for accessing and removing them, this being complemented by the brush (17) that is arranged around the carriage (1) on the front perimeter thereof, next to the blade (19), and with all this, to a large degree, preventing chips and dirt from entering into the guides (6-7) and the carriage (1).

An arrangement is thus devised that overall and in combination considerably improves the assembly, use or operation, as well as the maintenance of the metal bar-shears known on the market.

### ADVANTAGES OF THE INVENTION

The fundamental advantages of the improved metal bar-shear basically relate to the simplicity of its construction, the inclusion of features that facilitate its assembly, maintenance and repair, with the guarantee of improved operation over the arrangement of the metal bar-shears known in the market:
- With the block arrangement of the carriage (1) it is possible to manipulate the guides (6-7) which are accessed through the windows (8-9) provided for this purpose.
- With the arrangement of the "V'-shaped guides (6-7), a better seat is provided for the carriage (1), noticeably improving its operation.
- With the blocking of the carriage (1), and the greater size of the flanged tube (12), the crankshaft (13) can be dismantled, and this is not possible in the known arrangements.
- With the retainer seal and brush units (15-16) and the brush (17), to a large degree, the chips that fly off during the cutting operation are prevented from entering into the frame (11), it being possible to reposition said retainer seal and brush units in an easy, quick way, by virtue of the windows (18) provided in the frame.

The combination of features described in the claims and the subsequent advantages are not known in the market, which is a great advance and development of what is known, to date, regarding metal bar-shears.

### DESCRIPTION OF THE DIFFERENT ELEMENTS OF THE INVENTION

1- Actual shear carriage, the head of which carries the mobile blade (19) and has bores (21) for the blockage thereof.
2- Bores formed in the carriage (1) for blocking it with the frame and the bores (3) thereof with a pin.
3- Bores made in the walls (4-5) of the frame so that when they coincide with the bores (3), the carriage (1) can be blocked with a pin.
4- Inside wall of the shear frame.
5- Outside wall of the shear frame, which includes a larger opening for accessing the crankshaft (13), once the flanged tube (12) has been dismantled.
6- Upper guide of the carriage (1) that is "V'-shaped for seating the carriage (1) and the guide bars (10).
7- Lower guide of the carriage (1) that is "V'-shaped for seating the carriage (1) and the guide bars (10).
8- Window in the upper front part of the frame which is used for assembling and dismantling the guide (6).
9- Window in the lower rear part of the frame which is used for assembling and dismantling the guide (7).
10- Guide bars included in the guides (6-7) for supporting and sliding the carriage (1).
11- Position on the frame where the chips accumulate and where the lower guide (6) is installed.
12- External flanged tube of the shaft of the crankshaft (13) which is larger to compensate the larger opening provided in the frame wall (5).
13- Crankshaft of the carriage (1) including the eccentric (14) for producing the movement of the carriage (1).
14- Eccentric for the shaft of the crankshaft (13).
15- Vertical retainer seal and brush unit that is installed in the wall (4) of the frame and which is installed via the windows (18) provided for this purpose in the upper part of the frame.
16- Vertical retainer seal and brush unit that is installed in the wall (5) of the frame and which is installed via the windows (18) provided for this purpose in the upper part of the frame.
17- Brush complementing the retainer seal and brush unit (15-16) to prevent chips from entering inside (11) the frame.
18- Window formed in the upper part of the frame for installing and accessing the retainer seal and brush units (15-16).
19- Mobile shear blade that is attached to the carriage (1).
20- "V"-shaped retainer seals attached to the guides (6-7) in the front part thereof.
21- Retainer seal and brush unit attachment strip.
22- Roller support to facilitate removal of the lower guide (7).

### DESCRIPTION OF THE CONTENT OF THE DRAWINGS

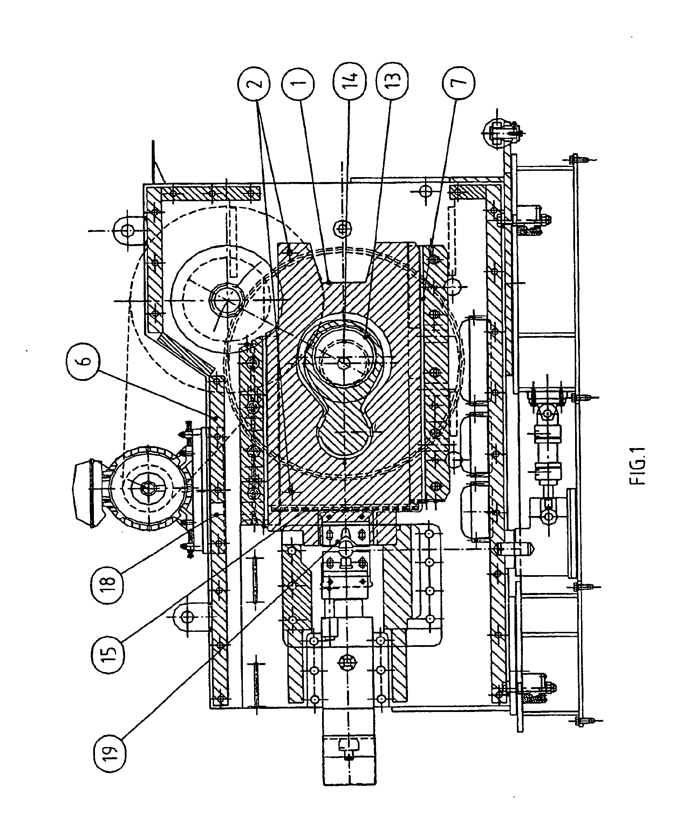

**Figure 1**. - Side view of the shear, showing the main elements of an embodiment of the invention according to claim 1 such as: the carriage (1) with the bores (2), the guides (6-7), the retainer seal and brush units (15), the crankshaft (13), the eccentric (14) and the blade (19), all arranged in a way that provides a metal bar-shear that operates in a conventional manner.

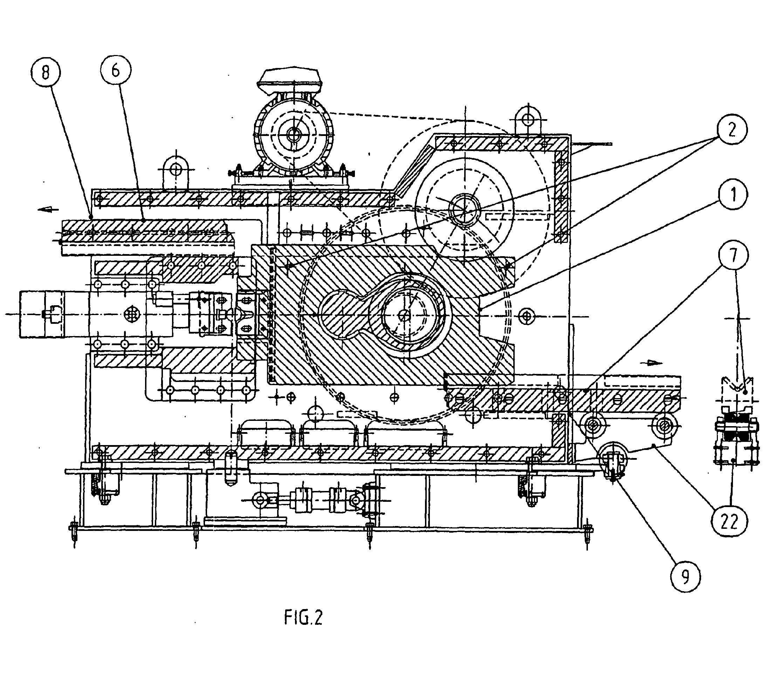

**Figure 2****.**- Side view, showing how the guides (6-7) can be handled either to be assembled or dismantled, or to be cleaned, since the guide (6) which is the top one has a window in the upper front part (8) and the guide (7) has one in the lower rear part (9), complemented by the support rollers (22), with the carriage (1) being blocked by the points or bores (2).

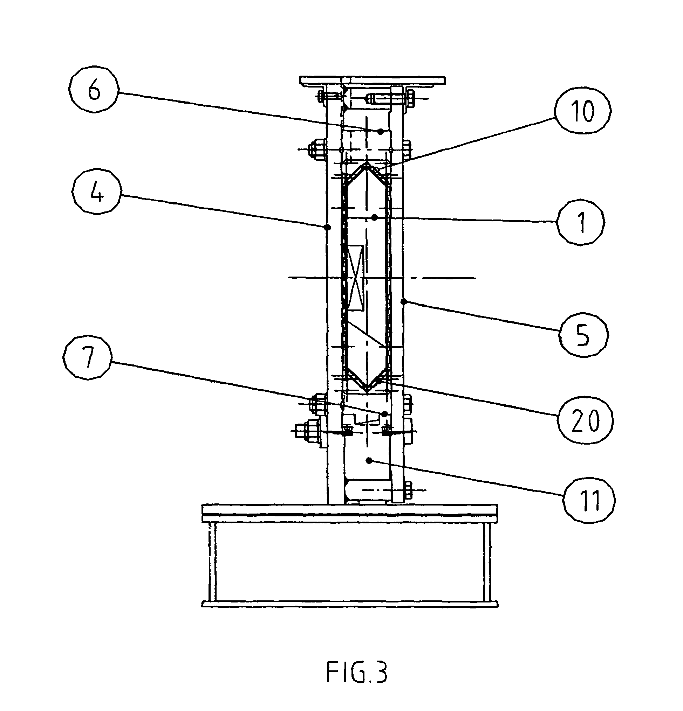

**Figure 3****.-** Front view showing the "V"-shaped arrangement of the guides (6-7), and how the carriage (1) seats on said guides (6-7) and the guide bars (10), creating a solid block, formed in turn with the frame walls (4-5).

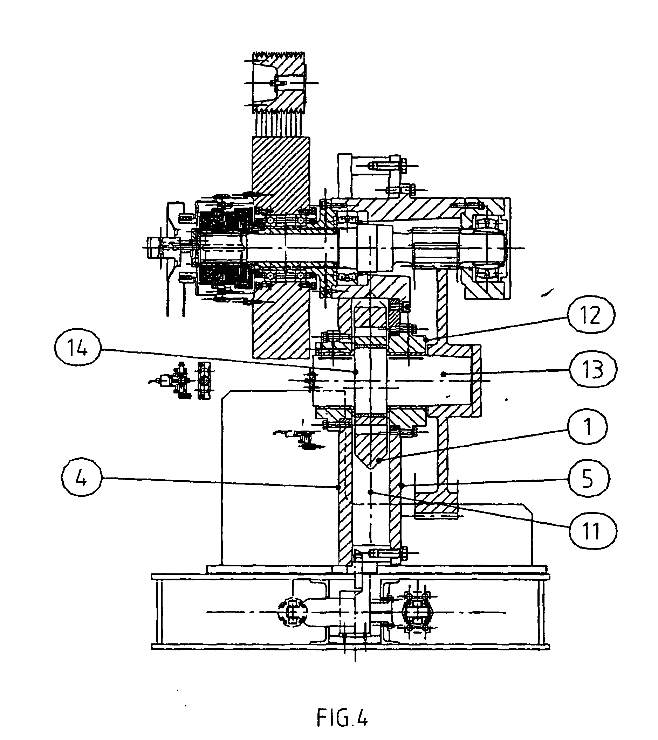

**Figure 4****.-** Front view of the whole shear corresponding to Figure 1 but seen from the front, showing the carriage (1), the frame walls (4-5), and how the outside wall (5) has a central opening through which it can be seen that the flanged tube (12) is larger so as to be able to remove the crankshaft (13) comprising the eccentric (14). Also position (11) is shown and indicated where the waste chips from the bars tend to collect when these are sheared.

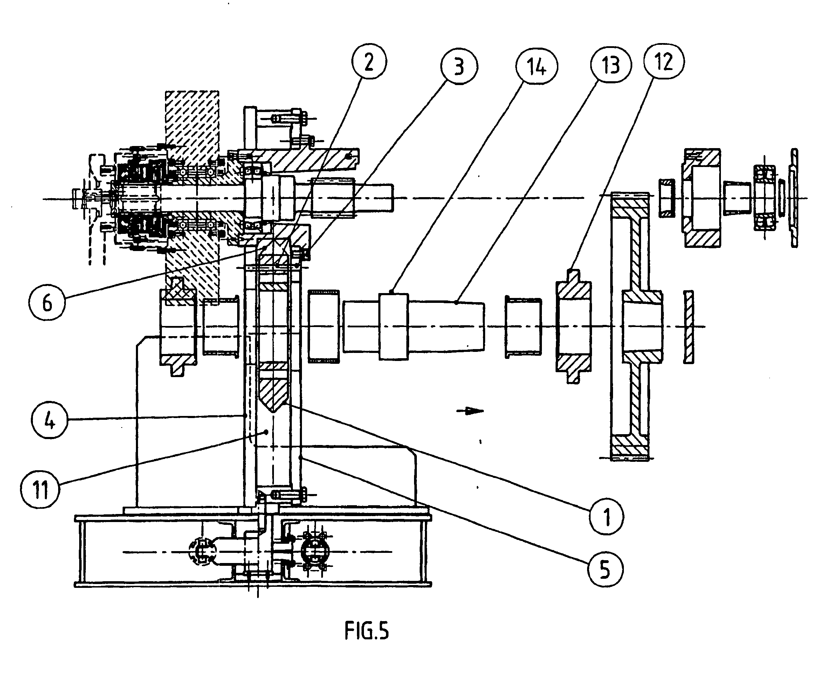

**Figure 5****.-** Same view as that of Figure 4, showing the breakdown of the shaft of the crankshaft (13) and the ensemble of parts making it up, particularly, those included in this invention, such as the flanged tube (12), the eccentric (14), the bores (2-3) enabling the carriage (1) to be blocked by means of a pin, the frame walls (4-5), the carriage (1), the guide (6), the location (11) of guide (7) where the chips collect.

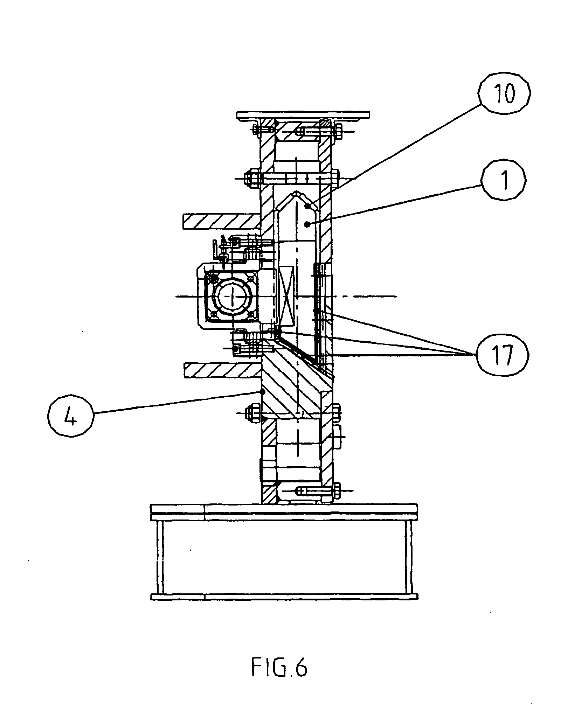

**Figure 6****.-** Front view of the carriage (1) showing the place where the brush (17) is located once it is mounted, illustrating how it is arranged around the perimeter of the carriage (1) in the contour in the front part of said carriage (1) around the support of blades (19), to retain the chips, keeping the machine clean and preventing the carriage (1) from being scratched.

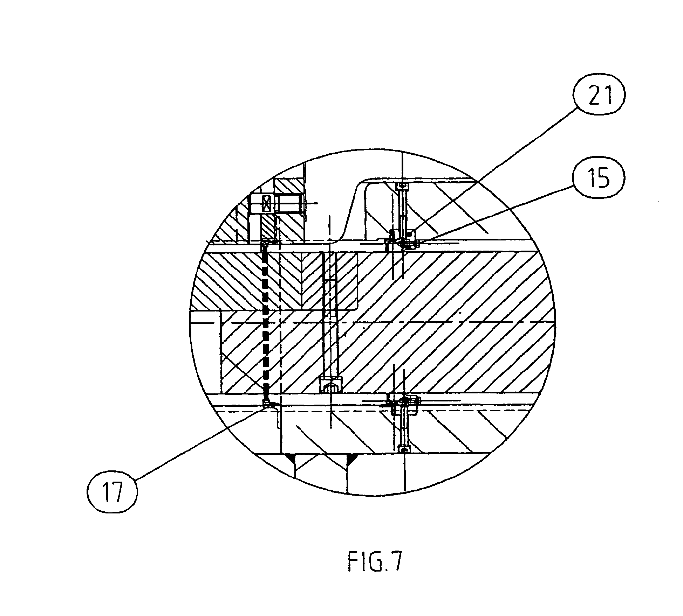

**Figure 7****.-** Detail of the support of the brush (17) of Figure 6^{a}, showing the shape and attachment of the brush (17) and the attachment strip (21) for the retainer seal and brush units (15).

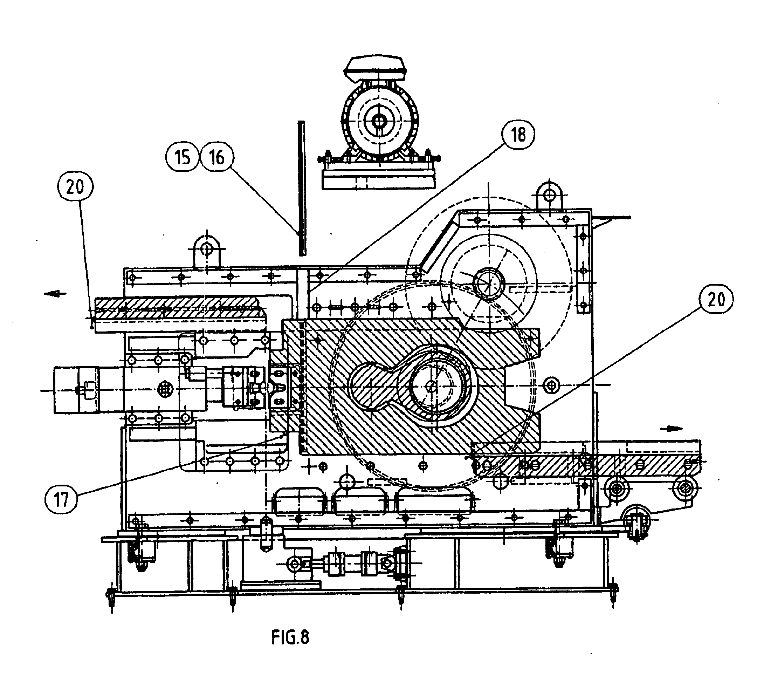

**Figure 8****.-** Side view of the shear, showing the location of the brush (17), the retainer seals (20) and the retainer seal and brush unit (15-16). This last view also shows a retainer seal and brush unit dismantled from the shear.

## Claims

1. Metal bar-shear, of the type including a carriage with horizontal movement which is provided with bores (2) that are opposite to bores (3) provided in walls (4-5) of a frame, enabling said carriage to be blocked on said frame by means of pins, the metal bar-shear being **characterised in that**
it includes guides (6-7) that are able to be assembled and disassembled, through windows (8-9) that have been formed in an upper front part and in a lower rear part of the frame while
the carriage (1) is being blocked and hung by means of said pins inserted in said bores (2-3).

2. Metal bar-shear according to claim 1, **characterised in that** it has support rollers (22) for supporting said guide (7) when proceeding to the assembling or disassembling thereof.

3. Metal bar-shear according to claim 2, **characterised in that** said guides (6-7) are "V"-shaped for supporting the carriage (1) with the intervention of guide bars (10).

4. Metal bar-shear according to claim 1, **characterised in that** the frame walls comprise an inside frame wall (4) and an outside frame wall (5), and that said outside frame wall (5) has an opening which, when the carriage (1) is blocked, enables a crankshaft (13) including an eccentric (14) and a larger flanged tube (12) to be disassembled, said opening corresponding to a central opening in the outside frame wall (5) that is larger than an opening in the inside frame wall (4).

5. Metal bar-shear according to any one of the preceding claims, **characterised in that** it is provided with retainer seal and brush units (15-16) that are joined to the frame walls (4-5) and that can be assembled or disassembled throughwindows (18) formed in the frame.

6. Metal bar-shear according to claim 5, **characterised in that** it has a brush (17) that is arranged on the perimeter of the carriage (1) in a part near to a mobile blade (19).

7. Metal bar-shear according to claims 1, 3, 5 and 6, **characterised in that** it has a retainer seal (20) located in the front part of the "V"-shaped guides (6 and 7).

## Patentansprüche

1. Metallene Stangenschere mit einem sich horizontal bewegenden Schlitten, der mit Bohrungen (2) versehen ist, die gegenüber den Bohrungen (3) an den Wänden (4-5) eines Rahmens angeordnet sind, so dass der Schlitten mit Stiften am Rahmen verriegelt werden kann, wobei sich die metallene Stangenschere **dadurch kennzeichnet, dass**
Sie Führungen (6-7) aufweist, die über Fenster (8-9), die im oberen vorderen und unteren hinteren Teil des Rahmens ausgebildet sind, ein- und ausgebaut werden können, während
der Schlitten (1) verriegelt und mit den eingesetzten Stiften in den Bohrungen (2-3) aufgehängt ist.

2. Metallene Stangenschere gemäß Anspruch 1, **dadurch gekennzeichnet, dass** sie Halterollen (22) zum Halten der Führung (7) aufweist, wenn diese ein- bzw- ausgebaut wird.

3. Metallene Stangenschere gemäß Anspruch 2, **dadurch gekennzeichnet, dass** die Führungen (6-7) "V"-förmig sind, um den Schlitten (1) mit der Erfindung der Führungsstangen (10) zu halten.

4. Metallene Stangenschere gemäß Anspruch 1, **dadurch gekennzeichnet, dass** die Rahmenwände eine innere Rahmenwand (4) und eine äußere Rahmenwand (5) umfassen und die äußere Rahmenwand (5) eine Öffnung aufweist, die, wenn der Schlitten (1) verriegelt ist, den Ausbau einer Kurbelwelle (13) mit einem exzentrischen (14) und einem größeren angeflanschten Rohr (12) ermöglicht, wobei die Öffnung mit einer mittigen Öffnung an der äußeren Rahmenwand (5) übereinstimmt, die größer ist als die Öffnung in der inneren Rahmenwand (4).

5. Metallene Stangenschere gemäß eines der vorausgehenden Ansprüche, **dadurch gekennzeichnet, dass** sie mit einer Haltedichtung und Bürsteneinheiten (15-16) versehen ist, die an den Rahmenwänden (4-5) angebracht sind und über in dem Rahmen gebildete Fenster (18) ein- und ausgebaut werden können.

6. Metallene Stangenschere gemäß Anspruch 5, **dadurch gekennzeichnet, dass** sie eine Bürste (17) aufweist, die auf dem Umfang des Schlittens (1) an einem Teil in der Nähe einer beweglichen Klinge (19) angebracht ist.

7. Metallene Stangenschere gemäß Ansprüche 1, 3, 5 und 6, **dadurch gekennzeichnet, dass** sie eine Haltedichtung (20) am vorderen Teil der "V"-förmigen Führungen (6 und 7) aufweist.

## Revendications

1. Cisaille à barres métallique, du type qui comprend un chariot qui se déplace horizontalement et qui est doté d'alésages (2) disposés en face des alésages (3) pratiqués dans les parois (4-5) d'un châssis, ce qui permet audit chariot d'être fixé audit châssis au moyen de broches, la cisaille à barres métallique **caractérisée en ce que**
elle est dotée de guides (6-7) qui peuvent être montés et démontés, à travers des fenêtres (8-9) qui ont été constituées dans une section avant supérieure et une section arrière inférieure du châssis alors que
le chariot (1) est bloqué et suspendu au moyen desdites broches qui sont introduites dans lesdits alésages (2-3).

2. Cisaille à barres selon la revendication 1, **caractérisée en ce qu'**elle est dotée de roulettes de support (22) pour servir de support audit guide (7) au moment de l'exécution de son montage et de son démontage.

3. Cisaille à barre métalliques selon la revendication 2, **caractérisée en ce que** les guides (6-7) sont en forme de « V » pour servir de support au chariot (1) à l'aide de barres de guidage (10).

4. Cisaille à barres selon la revendication 1, **caractérisée en ce que** les parois du châssis se composent d'une paroi interne (4) et d'une paroi externe (5) et que ladite paroi externe (5) présente une ouverture qui, lorsque le chariot (1) est bloqué, active un vilebrequin (13) comprenant un tuyau à brides excentrique (14) et un autre plus grand (12) à démonter, ladite ouverture correspondant à une ouverture centrale dans la paroi extérieure (5) du châssis qui est plus grande que l'ouverture de la paroi intérieure (4) du châssis.

5. Cisaille à barres métallique selon l'une quelconque des revendications précédentes, **caractérisée en ce qu'**elle est dotée d'un joint anti-fuite et de brosses (15-16) qui sont fixées sur les parois (4-5) du châssis et qui peuvent être montées ou démontées à travers les fenêtres (18) constituées dans le châssis.

6. Cisaille à barres métallique selon la revendication 5, **caractérisée en ce qu'**elle est dotée d'une brosse (17) qui est placée dans le périmètre du chariot (1), dans une section proche de la lame amovible (19).

7. Cisaille à barres métallique selon les revendications 1, 3, 5 et 6 **caractérisée en ce qu'**elle est dotée d'un joint anti-fuite (20) placée à l'avant du guide en forme de « V » (6 et 7).
